# EUROPÄISCHE PATENTSCHRIFT

(11) **EP 0 739 954 B1**
(45) Veröffentlichungstag und Bekanntmachung des Hinweises auf die Patenterteilung: **01.07.1998**
(21) Anmeldenummer: 96106148.8
(22) Anmeldetag: 19.04.1996
(51) Int. Cl.: C09D 5/44

(54) **Wässriger kathodisch abscheidbarer Elektrotauchlack und Beschichtungsverfahren unter dessen Verwendung**
Cathodic electrodeposition paint and coating method
Revêtement par électrodéposition cationique et procédé de revêtement

(30) Priorität: 25.04.1995 DE 19515089
(43) Veröffentlichungstag der Anmeldung: 30.10.1996
(73) Patentinhaber: Herberts Gesellschaft mit beschränkter Haftung, 42285 Wuppertal (DE)
(72) Erfinder: Büttner, Gabriele, 40880 Ratingen (DE); Klein, Klausjörg, 42289 Wuppertal (DE)
(74) Vertreter: Türk, Gille, Hrabal, Leifert

(56) Entgegenhaltungen:
- EP-A- 0 653 467
- WO-A-87/02717
- WO-A-91/08266
- GB-A- 2 129 807

## Beschreibung

Die Erfindung betrifft wäßrige kathodisch abscheidbare Elektrotauchlacke (KTL). Sie sind zur Herstellung von grau bis schwarz oder dunkelgefärbten Überzügen durch kataphoretische Abscheidung geeignet. Die Überzüge sind elektrisch nicht leitfähig und weisen einen guten Umgriff auf.

Elektrotauchlacke enthalten üblicherweise erhebliche Mengen anorganischer Pigmente oder Füllstoffe. Ruß wird im allgemeinen nur in geringen Mengen zur Farbgebung zugesetzt. Bei Verwendung erhöhter Rußanteile werden nach dem Einbrennen leitfähige Überzüge erhalten.

Die JP-54 116 633-A beschreibt kathodische Tauchlacke (KTL), die bezogen auf den Harzfestkörper 0,1 bis 5 Gew.-% Graphit mit einer Teilchengröße unter 60 µm enthalten. Die Lacke weisen Stabilitätsprobleme auf. Nach dem Einbrennen werden leitfähige Überzüge erhalten.

Die GB-A-2 129 807 beschreibt kathodisch abscheidbare Tauchlacke, die fein verteilten Kohlenstoff, z.B. Graphit oder Ruß mit einem Teilchendurchmesser von 15 bis 85 µm in einem Mengenanteil von 8 bis 50 Gew.-%, bezogen auf Festkörper, enthalten. Daraus abgeschiedene Lackschichten weisen nach dem Einbrennen eine hohe elektrische Leitfähigkeit auf, so daß eine zweite Lackschicht elektrophoretisch auf der ersten Lackschicht abgeschieden werden kann.

Die DE-A-3 538 792 beschreibt kathodisch abscheidbare Tauchlacke, die bezogen auf Festkörper 1,5 bis 5,1 Gew.-% elektrisch leitfähigen Ruß mit einer Teilchengröße von 25 bis 35 nm enthalten. Nach dem Einbrennen der aus diesem KTL abgeschiedenen elektrisch leitfähigen Lackschicht wird diese durch kataphoretische Abscheidung mit einer zweiten KTL-Schicht versehen.

Auch die in GB-A-2 128 807 und in DE-A-3 538 792 beschriebenen KTL weisen Stabilitätsprobleme auf. Die elektrisch leitfähigen Lackschichten bieten keine elektrische Isolierung. Der Korrosionsschutz dieser so beschichteten Substrate ist schlecht.

Der Umgriff und die damit in Zusammenhang stehende Korrosionslinie der bekannten, Ruß oder Graphit enthaltenden kathodischen Elektrotauchlacke ist verbesserungsbedürftig. Zudem werden bei hohem Gehalt an Ruß oder Graphit unbefriedigende Oberflächenstrukturen erzielt.

Aufgabe der Erfindung ist die Bereitstellung eines kathodischen Elektrotauchlacks (KTL) mit guter Stabilität, der zu Überzügen mit grauen, schwarzen oder dunklen Farbtönen mit gutem Korrosionsschutz und verbessertem Umgriff führt. Aus diesem Elektrotauchlack auf elektrisch leitfähigen Substraten abgeschiedene Lackschichten sollen vor und nach dem Vernetzen elektrisch isolierend wirken, d.h. einen hohen Filmwiderstand besitzen. Die elektrophoretische Abscheidung einer weiteren Elektrotauchlackschicht auf dem KTL-beschichteten Substrat soll nicht mehr möglich sein. Die Oberflächen der erhaltenen Überzüge sollen glatt und homogen sein.

Die Aufgabe wird gelöst durch einen kathodisch abscheidbaren Elektrotauchlack, der neben üblichen filmbildenden, selbst- oder fremdvernetzenden kationischen Bindemitteln sowie gegebenenfalls Vernetzern, Pigmenten, Füllstoffen, lacküblichen Additiven und Lösemitteln, 5 bis 40 Gew.-%, bezogen auf den Feststoffgehalt, Ruß enthält, wobei der Ruß eine mittlere Teilchengröße zwischen 120 und 1000 nm aufweist.

Bei den erfindungsgemäßen Elektrotauchlacken handelt es sich um wäßrige Überzugsmittel mit einem Festkörper von beispielsweise 10 - 25 Gew.-%. Der Festkörper wird durch übliche Bindemittel, die kationische oder in kationische Gruppen überführbare Substituenten sowie gegebenenfalls zur chemischen Vernetzung fähige Gruppen tragen, sowie gegebenenfalls Vernetzern, Pigmenten, Füllstoffen und weiteren lacküblichen Additiven und dem erfindungswesentlichen Anteil an Ruß mit einer mittleren Teilchengröße zwischen 120 und 1000 nm gebildet. Die Bindemittel enthalten kationische Gruppen oder basische Gruppen, die in kationische Gruppen überführt werden können. Besonders bevorzugt sind stickstoffhaltige basische oder kationische Gruppen, wie Aminogruppen und Ammoniumgruppen. Diese Gruppen können quarternisiert vorliegen oder sie werden mit einem üblichen Neutralisationsmittel, z.B. einer organischen Monocarbonsäure, wie z.B. Ameisensäure, Essigsäure, wie dem Fachmann geläufig, in kationische Gruppen überführt. Vorhandene Aminogruppen können primär, sekundär und/oder tertiär sein. Sie können ganz oder teilweise neutralisiert vorliegen.

Beispiele für verwendbare basische Harze sind beispielsweise primäre, sekundäre und/oder tertiäre Aminogruppen enthaltende Harze, deren Aminzahlen z.B. bei 20 bis 250 mg KOH/g liegen. Das Gewichtsmittel der Molmasse (Mw) der Harze liegt bevorzugt bei 300 bis 10000. Beispiele für solche Harze sind Amino(meth)acrylatharze, Aminoepoxidharze, Aminoepoxidharze mit endständigen Doppelbindungen, Aminoepoxidharze mit primären OH-Gruppen, Aminopolyurethanharze, aminogruppenhaltige Polybutadienharze oder modifizierte Epoxidharz-Kohlendioxid-Amin-Umsetzungsprodukte. Diese Harze können selbstvernetzend sein oder sie werden mit üblichen Vernetzern im Gemisch eingesetzt. Beispiele für solche Vernetzer sind die bekannten blockierten Polyisocyanate, Vernetzer mit endständigen Doppelbindungen, Polyepoxidverbindungen oder Vernetzer, die umesterungsfähige Gruppen enthalten.

Beispiele für in kathodischen Tauchlack (KTL)-Bädern eingesetzte Basisharze und Vernetzer, die erfindungsgemäß verwendet werden können, sind in der EP-A-0 082 291, EP-A-0 234 395, EP-A-0 209 857, EP-A-0 227 975, EP-A-0 178 531, EP-A-0 333 327, EP-A-0 310 971, EP-A-0 456 270, US-A-3 922 253, EP-A-0 261 385, EP-A-0 245 786, DE-A-33 24 211, EP-A-0 476 514 beschrieben. Diese Harze können allein oder im Gemisch eingesetzt werden.

Der im erfindungsgemäßen KTL eingesetzte Ruß besitzt eine mittlere Teilchengröße zwischen 120 und 1000 nm, bevorzugt über 200 nm. Unter mittlerer Teilchengröße ist die beim Dispergieren nicht unterschreitbare Primärkorngröße zu verstehen. Bei dem im erfindungsgemäßen KTL eingesetzten Ruß kann es sich bespielsweise um Ruß handeln, wie er durch unvollständige Verbrennung von flüssigen oder gasförmigen Kohlenwasserstoffen gewonnen werden kann. Bevorzugt sind jedoch Ruße, die durch katalytische oder thermische Zersetzung von flüssigen oder gasförmigen Kohlenwasserstoffen gewonnen werden können. Besonders bevorzugt ist Thermalruß, wie er durch thermische Zersetzung von Kohlenwasserstoffen, beispielsweise Erdgas gewonnen werden kann. Derartige Ruße sind im Handel erhältlich und werden beispielsweise in der Gummiindustrie als Füllstoffe verwendet. Ein Beispiel für einen im erfindungsgemäßen KTL besonders bevorzugt einsetzbaren Ruß wird von der Firma Degussa unter dem Handelsnamen Huber N 990 vertrieben.

Der Ruß mit einer mittleren Teilchengröße zwischen 120 und 1000 nm wird in Mengenanteilen von 5 bis 40 Gew.-%, bevorzugt zwischen 10 und 30 Gew.-%, besonders bevorzugt zwischen 15 und 25 Gew.-%, jeweils bezogen auf den Feststoffgehalt des KTL, eingesetzt.

Zusätzlich zu den Basisharzen und gegebenenfalls vorhandenem Vernetzer und dem erfindungswesentlichen Gehalt an Ruß mit einer mittleren Teilchengröße zwischen 120 und 1000 nm kann das KTL-Überzugsmittel weitere Pigmente, Füllstoffe, lackübliche Additive und Lacklösemittel enthalten. Als Pigmente kommen die üblichen anorganischen und/oder organischen Pigmente in Frage. Beispiele sind Titandioxid, Eisenoxid, Kaolin, Talkum oder Siliciumdioxid. Erfindungsgemäß können als Pigmente auch gewöhnliche lackübliche Ruße, wie sie vorstehend bei der Diskussion des Stands der Technik beschrieben wurden, eingesetzt werden. Da im Rahmen der Erfindung jedoch Überzüge erhalten werden sollen, die trotz eines hohen Anteils an Ruß keine elektrische Leitfähigkeit aufweisen und bei üblichen Spannungen unter 500 V isolierend wirken, werden bevorzugt keine oder nur geringe Mengen Ruße eingesetzt, die als Leitfähigkeitspigmente beschrieben sind und bei deren Verwendung sich nach dem Einbrennen elektrisch leitfähige Überzüge ergeben. Werden die Überzugsmittel als Korrosionsschutzgrundierung eingesetzt, so ist es möglich, daß sie Korrosionsschutzpigmente enthalten. Beispiele dafür sind Zinkphosphat oder organische Korrosionsinhibitoren. Die Art und Menge der Pigmente richtet sich nach dem Verwendungszweck der Überzugsmittel.

Als Additive sind beispielsweise die üblichen Additive für KTL-Überzugsmittel möglich. Beispiele dafür sind Netzmittel, Neutralisationsmittel, Verlaufsmittel, Katalysatoren und Antischaummittel. Die erfindungsgemäßen KTL-Überzugsmittel können auch übliche Lösemittel in den für KTL üblichen Anteilen enthalten. Derartige für KTL übliche Lösemittel sind beispielsweise Glykolether, wie Butylglykol und Ethoxypropanol und Alkohole, wie Butanol. Die erfindungsgemäßen KTL können nach den bekannten Verfahren zur Herstellung von KTL-Bädern bereitet werden. Bei dem erfindungsgemäßen Einsatz von Ruß mit einer mittleren Teilchengröße zwischen 120 und 1000 nm wird dieser bevorzugt zu einer Pigmentpaste dispergiert, z.B. unter Verwendung von bekannten Pastenharzen. Ebenso können die gegebenenfalls zusätzlichen Pigmente und Füllstoffe zu Pigmentpasten dispergiert werden. Für die Dispergierung geeignete Harze sind dem Fachmann geläufig. Beispiele für in KTL-Bädern verwendbare Pastenharze sind in der EP-A-0 183 025 und in der EP-A-0 469 497 beschrieben.

Das Pigment/Bindemittel-Gewichtsverhältnis des erfindungsgemäßen Elektrotauchlacks beträgt beispielsweise zwischen 0,05 : 1 und 0,8 : 1, bevorzugt zwischen 0,05 : 1 und 0,4 : 1, wobei in den Pigmentanteil der Gehalt an Ruß mit einer mittleren Teilchengröße zwischen 120 und 1000 nm und Füllstoffen einbezogen ist. Bevorzugt enthält der erfindungsgemäße Elektrotauchlack neben dem Ruß mit einer mittleren Teilchengröße zwischen 120 und 1000 nm nur geringe Anteile oder keine weiteren Pigmente oder Füllstoffe. Weiterhin bevorzugt sind solche KTL-Bäder, die keine gesundheitlich bedenklichen Schwermetallverbindungen, wie z.B. Bleiverbindungen enthalten. Beispiele dafür sind beschrieben in EP-A-0 304 754, EP-A-0 341 596, EP-A-0 347 785, EP-A-0 414 199 und DE-A-42 22 596.

Die erfindungsgemäßen Elektrotauchlacke sind stabil. Es besteht keine Neigung zur Bildung von Flokkulaten oder zur Pigmentsedimentation.

Aus den erfindungsgemäßen Elektrotauchlackbädern können unter üblichen Bedingungen verschiedene Substrate beschichtet werden. Diese weisen nach dem Einbrennen eine einwandfreie Oberfläche auf. Die mechanischen sowie die Korrosionsschutzeigenschaften der unter Verwendung der erfindungsgemäßen Elektrotauchlackbäder hergestellten Lackschichten ist gut. Überraschend ist es, daß die aus den erfindungsgemäßen Elektrotauchlacken hergestellten eingebrannten Lackschichten bei üblichen Schichtdicken von z.B. > 10 µm bis beispielsweise 40 µm elektrisch isolierend wirken, obwohl ein hoher Rußgehalt vorliegt. Unter elektrisch isolierender Wirkung ist hier zu verstehen, daß der elektrische Filmwiderstand so hoch ist, daß er bis zu einer Spannung von 500 V isolierend wirkt. Auf die eingebrannte KTL-Schicht aus dem erfindungsgemäßen Überzugsmittel kann keine weitere Lackschicht elektrophoretisch aufgebracht werden.

Die erfindungsgemäßen Elektrotauchlacke besitzen hohe Volumenverhältnisse von Ruß plus gegebenenfalls weiterem Pigment plus gegebenenfalls Füllstoff zu Bindemittel. Sie sind sedimentationsstabil.

Die erfindungsgemäßen KTL-Überzugsmittel zeigen überraschenderweise einen deutlich erhöhten Umgriff im Vergleich zu bekannten, üblichen Ruß oder Graphit enthaltenden KTL-Überzugsmitteln.

Die erfindungsgemäßen Elektrotauchlacke eignen sich insbesondere auf dem Kraftfahrzeugsektor, beispielsweise zur Grundierung von Kraftfahrzeugkarosserien oder Kraftfahrzeugkarosserieteilen. Diese Grundierungen können gegebenenfalls mit weiteren Lackschichten versehen werden.

### Beispiel 1 (Herstellung einer KTL-Dispersion)

a) 832 Teile des Monocarbonats eines Epoxidharzes auf der Basis von Bisphenol A (Handelsprodukt Epicote 828) werden mit 830 Teilen eines handelsüblichen Polycaprolactonpolyols (Handelsprodukt CAPA 205) und 712 Teilen Diglykoldimethylether gemischt und bei 70 bis 140°C mit ungefähr 0,3 % BF₃-Etherat zur Reaktion gebracht bis eine Epoxidzahl von 0 erreicht wird. Zu diesem Produkt (Festkörper 70 %, 2 Äquivalente Carbonat) werden bei 40 bis 80°C in Gegenwart von 0,3 % Zn-Acetylacetonat als Katalysator 307 Teile eines Umsetzungsproduktes aus 174 Teilen Toluylendiisocyanat (2 Äquivalente NCO) mit 137 Teilen 2-Ethylhexanol unter Zugabe von 0,3 % Benzyltrimethylammoniumhydroxid (Triton B) mit einem NCO-Gehalt von ca. 12,8 % gegeben. Es wird bis zu einem NCO-Wert von ca. 0 umgesetzt und dann mit Diglykoldimethylether auf ca. 70 % Festkörper eingestellt.
b) Zu 1759 Teilen eines Biscarbonats eines Epoxiharzes auf der Basis von Bisphenol A (Handelsprodukt Epicote 1001) werden bei 60 bis 80°C 618 Teile eines Umsetzungsproduktes aus 348 Teilen Toluylendiisocyanat (80 % 2,4-Isomeres; 20 % 2,6-Isomeres) mit 274 Teilen 2-Ethylhexanol unter Zugabe von 0,3 % Benzyltrimethylammoniumhydroxid als Katalysator mit einem Rest-NCO-Gehalt von 12,8 % langsam zugegeben. Die Reaktion wird bis zu einem NCO-Wert von ca. 0 fortgesetzt. Das Produkt hat einen Feststoffgehalt von 70 %. Zu 860 Teilen Bishexamethylentriamin in 2315 Teilen Methoxypropanol gelöst werden bei einer Temperatur von 20 bis 40°C 622 Teile des Umsetzungsproduktes aus 137 Teilen 2-Ethylhexanol mit 174 Teilen Toluylendiisocyanat unter Benzyltrimethylammoniumhydroxid-Katalyse (0,3 %) zugegeben (NCO-Gehalt ca. 12,8 %) und bis zu einem NCO-Gehalt von ungefähr 0 umgesetzt. Dann werden 4737 Teile des Umsetzungsproduktes b) und 3246 Teile des Reaktionsproduktes a) (jeweils 70 % in Diglykoldimethylether) zugegeben und bei 60 bis 90°C zur Reaktion gebracht. Bei einer Aminzahl von ca. 32 mg KOH/g wird die Reaktion beendet. Das entstehende Produkt wird im Vakuum auf einen Festkörper von ca. 85 % abdestilliert.
c) Es wird mit 30 mmol Ameisensäure/100 g Harz neutralisiert. Anschließend wird durch Zugabe von deionisiertem Wasser in eine wäßrige Dispersion mit einem Festkörper von 40 Gew.-% überführt.

### Herstellung von Pigmentpasten

### Beispiel 2

Zu 223 Teilen des Pastenharzes nach EP-A-0 469 497 A1 Beispiel 1 (55 %) werden unter einem schnellaufenden Rührwerk 15 Teile Essigsäure (50 %), 30 Teile eines handelsüblichen Netzmittels (50 %) und 374 Teile deionisiertes Wasser gegeben.

Dazu werden 17,2 Teile Dibutylzinnoxid, 12,3 Teile Ruß mit einer mittleren Teilchengröße von 56 nm und 215,9 Teile Kaolin gegeben. Mit deionisiertem Wasser wird auf einen Festkörper von 45 Gew.-% eingestellt und auf einer Perlmühle vermahlen. Es entsteht eine stabile Pigmentpaste.

### Beispiel 3

Beispiel 2 wird wiederholt mit dem Unterschied, daß anstelle der dortigen Pigmentmischung 228,1 Teile Ruß mit einer mittleren Teilchengröße von 56 nm und 17,2 Teile Dibutylzinnoxid verwendet werden.

### Beispiel 4

Beispiel 2 wird wiederholt mit dem Unterschied, daß anstelle der dortigen Pigmentmischung 228,1 Teile Thermalruß mit einer mittleren Teilchengröße von 320 nm (Huber N 990 von Degussa) und 17,2 Teile Dibutylzinnoxid verwendet werden.

### Vergleichsbeispiele 5 und 6 und Beispiel 7 (Herstellung von KTL-Bädern und -Beschichtungen)

Zu 2250 Teilen KTL-Dispersion werden 3083 Teile deionisiertes Wasser gegeben. Unter gutem Rühren werden 667 Teile Pigmentpaste zugesetzt. Es entstehen KTL-Bäder mit einem Festkörper von 20 Gew.-%. Aus diesen werden übliche phosphatierte Karosseriestahlbleche in 20 µm Trockenschichtdicke kathodisch abgeschieden und eingebrannt. Nachfolgende Tabelle stellt die Zusammensetzung der KT-Lacke und die erhaltenen Prüfergebnisse zusammen.

| Lack | KTL Dispersion | Pigmentpaste | Einbrenntemperatur¹⁾ | Filmwider stand²⁾ | Korrosionslinie³⁾ |
|---|---|---|---|---|---|
| 5 Vergl. | Beisp 1 | Beisp 2 | 170 | >10¹⁰ | 17,5 |
| 6 Vergl. | Beisp 1 | Beisp 3 | 170 | 1,5x10⁴ | 14 |
| 7 Erf. | Beisp 1 | Beisp 4 | 170 | >10¹⁰ | 21,2 |

| | | | | | |
|---|---|---|---|---|---|
| 1) Einbrennbedingung: 30 min. Objekttemperatur, Angaben in °C | | | | | |
| 2) nach DIN 53 482 mit Meßspannung 100 V, Angaben in Ohm | | | | | |
| 3) Ermittlung der Korrosionslinie nach VDA-Richtlinie 621 - 180. Der angegebene Wert gibt die rostfreie Strecke in cm an. Der Korrosionstest wurde als Salzsprühtest von 240 Stunden Dauer nach DIN 53 167 durchgeführt. | | | | | |

Das unter Verwendung von Lack 6 beschichtete Substrat wies eine rauhe, strukturierte Oberfläche auf. Die Badstabilität und die Korrosionsschutzwirkung von Lack 6 waren unzureichend. Diese Nachteile waren bei den Lacken 5 und 7 nicht vorhanden.

## Patentansprüche

1. Wäßriger, kathodisch abscheidbarer Elektrotauchlack mit einem Gehalt an einem oder mehreren, selbst- oder fremdvernetzenden kationischen Bindemitteln, sowie gegebenenfalls Vernetzern, Pigmenten, Füllstoffen, lacküblichen Additiven und/oder Lösemitteln, gekennzeichnet durch einen Gehalt von 5 bis 40 Gew.-%, bezogen auf den Festkörper, an Ruß mit einer mittleren Teilchengröße von 120 bis 1000 nm.

2. Elektrotauchlack nach Anspruch 1, dadurch gekennzeichnet, daß er durch thermische Zersetzung von Kohlenwasserstoffen erhaltenen Thermalruß enthält.

3. Verfahren zur Herstellung von elektrisch isolierenden Überzügen mit grauen, schwarzen oder dunklen Farbtönen, auf elektrisch leitfähigen Substraten, durch kataphoretische Elektrotauchlackierung, dadurch gekennzeichnet, daß man die Elektrotauchlackierung mit einem kathodisch abscheidbaren Elektrotauchlack nach Anspruch 1 oder 2 durchführt.

4. Verfahren nach Anspruch 3, dadurch gekennzeichnet, daß man Überzüge mit einer Schichtdicke von über 10 µm aufträgt.

5. Verwendung der Überzugsmittel nach Anspruch 1 oder 2 zur kataphoretischen Abscheidung von Überzügen mit gutem Umgriff.

## Claims

1. An aqueous, cathodically depositable electro-dip lacquer having a content of one or more self- or externally-crosslinking cationic binder vehicles, and optionally also of crosslinking agents, pigments, extenders, customary lacquer additives and/or solvents, characterised by a content of 5 to 40 % by weight, with respect to the solids content, of carbon black with an average particle size of 120 to 1000 nm.

2. An electro-dip lacquer according to claim 1, characterised in that it contains thermal carbon black obtained by the thermal decomposition of hydrocarbons.

3. A method of producing electrically insulating coatings with grey, black or dark shades of colour on electrically conductive substrates by cataphoretic electro-dip coating, characterised in that the electro-dip coating is carried out using a cathodically depositable electro-dip lacquer according to claims 1 or 2.

4. A method according to claim 3, characterised in that coatings with a coat thickness greater than 10 µm are deposited.

5. The use of the coating media according to claims 1 or 2 for the cataphoretic deposition of coatings having a good wrap-around effect.

## Revendications

1. Peinture aqueuse à appliquer par électrodéposition cathodique en immersion, contenant un ou plusieurs liants cationiques, auto-réticulants ou réticulant sous l'action d'un agent étranger, et le cas échéant des agents réticulants, des pigments, des matières de charge, des additifs usuels pour peintures et vernis et/ou des solvants, caractérisée par une teneur de 5 à 40 % en poids de noir de carbone à une dimension de particule moyenne de 120 à 1000 nm, par rapport aux matières solides.

2. Peintures à appliquer par électrodéposition selon revendication 1, caractérisée en ce qu'elle contient du noir thermique obtenu par décomposition d'hydrocarbures à la chaleur.

3. Procédé pour l'application de revêtements isolants de l'électricité à nuances grises, noires ou sombres sur des supports conducteurs de l'électricité par électrodéposition cataphorétique en immersion, caractérisé en ce que l'on procède aux revêtements par électrodéposition à l'aide d'une peinture pour électrodéposition cathodique selon revendication 1 ou 2.

4. Procédé selon revendication 3, caractérisé en ce que l'on applique des revêtements à une épaisseur de couche supérieure à 10 µm.

5. Utilisation des produits de revêtement selon revendication 1 ou 2 pour la déposition cataphorétique de revêtements avec de bonnes propriétés d'enveloppement.
